# EUROPÄISCHE PATENTSCHRIFT

(11) **EP 2 153 257 B1**
(45) Veröffentlichungstag und Bekanntmachung des Hinweises auf die Patenterteilung: **31.03.2021**
(21) Anmeldenummer: 08715488.6
(22) Anmeldetag: 13.02.2008
(51) Int. Cl.: G02B 5/32

(54) **VERFAHREN ZUM HERSTELLEN EINES MEHRFARBIGEN VOLUMENHOLOGRAMMS, DOKUMENT MIT EINEM SOLCHEN HOLOGRAMM UND VOLUMENHOLOGRAMM-MASTER**
METHOD FOR THE PRODUCTION OF A MULTICOLOR VOLUME HOLOGRAM, DOCUMENT WITH SUCH A HOLOGRAM, AND VOLUME HOLOGRAM MASTER
PROCEDE DE FABRICATION D'HOLOGRAMME EPAIS POLYCHROME, DOCUMENT COMPORTANT UN TEL HOLOGRAMME, ET HOLOGRAMME EPAIS MAITRE

(30) Priorität: 01.06.2007 DE 102007025907
(43) Veröffentlichungstag der Anmeldung: 17.02.2010
(73) Patentinhaber: Hologram Industries Research GmbH, 85652 Pliening-Ottersberg (DE)
(72) Erfinder: DAUSMANN, Günther, 85630 Grasbrunn (DE); YANG, Zishao, 85435 Erding (DE)
(74) Vertreter: Farago-Schauer, Peter Andreas
(86) Internationale Anmeldenummer: PCT/DE2008/000262
(87) Internationale Veröffentlichungsnummer: WO 2008/145077

(56) Entgegenhaltungen:
- EP-A- 0 919 961
- EP-A1- 1 739 507
- JP-A- 2006 349 874
- US-A- 6 097 514
- US-A1- 2004 121 241

## Beschreibung

Die Erfindung bezieht sich auf ein Verfahren zur Herstellung eines mehrfarbigen Reflexions-Volumenhologramms, ein Dokument mit einem solchen Hologramm und ein Volumenhologramm-Master, gemäß Oberbegriff des Anspruchs 1, 7 bzw. 8, wie sie z. B. für/als Hologramm-Overlays für Sicherheitsdokumente zum erhöhten Schutz gegen Kopieren oder Nachahmung Verwendung finden.

Bei Sicherheitsdokumenten verschiedenster Art, wie z. B. Ausweisen, Pässen, Führerscheinen und Wertpapieren wird schon jetzt eine Vielzahl unterschiedlicher Hologrammtechnologien angewandt. In den meisten Fällen ist die Wiedererkennbarkeit zumindest für den "Mann/Frau auf der Straße" sehr gering. Diese Hologramme bieten zwar schon einen relativ guten Schutz gegen Kopieren und Nachahmung, können aber mit etwas Aufwand von Spezialisten nachgestellt werden.

Üblicherweise werden für die Wiedererkennung Morphing und/oder Flippeffekte verwendet. Zum Beispiel soll sich beim Ändern des Betrachtungswinkels oder beim Ändern des Rekonstruktionswinkels ein Objekt kontinuierlich oder sprunghaft in ein anderes ändern. Dies ist z. B. aus der US 4,761,543 bekannt, wobei dort der Effekt in allen Regenbogenfarben sichtbar ist (Prägehologramm = Oberflächenhologramm), oder aus der EP 0919961 B1, in der dieser Effekt in nur einer festgelegten Farbe dargestellt werden kann (Volumenhologramm).

Hat man ein mehrfarbiges Reflexions-Volumenhologramm, muss dieses nach dem Stand der Technik mit mehreren Lasern aufgenommen oder nach der Belichtung durch Schrumpfen oder Schwellen partiell oder ganzflächig farblich verändert werden. Beim Schrumpfen oder Schwellen ist das aufgenommene Objekt außer in der Farbe in seiner Form stabil und der Rekonstruktionswinkel zum Rekonstruktionsstrahl ändert sich. Links-Rechts-Betrachtungswinkel bleiben für nach dem Stand der Technik aufgenommene Hologramme mehr oder weniger stabil.

Schließlich wird in der JP 2006 349 874 A u. a. ein Verfahren zum Herstellen eines mehrfarbigen Reflexions-Volumenhologramms beschrieben (Fig. 14), bei dem übereinander drei Reflexions-Volumen-Masterhologramme vorgesehen sind, entsprechend den Farbkomponenten blau, grün und rot, mit darüber angeordneter Kopierschicht. Zum Kopieren wird zwar nur ein einziger (roter) Kopier- oder Rekonstruktionsstrahl verwendet, der jedoch entsprechend den drei unterschiedlichen Farbkomponenten bzw. Mastern, mit Hilfe eines Spiegels als drei unterschiedliche Kopierstrahlen auftreffen, mit entsprechend unterschiedlichen Einfallswinkeln. Es sind hier somit zum Herstellen von Mehrfarbigen Reflexionshologramm-Kopien jeweils drei Master erforderlich, sowie eine Spiegel-Vorrichtung, welche aus dem einen Laserstrahl drei Strahlen mit unterschiedlichen Einfallswinkeln erzeugt, was insgesamt relativ aufwändig ist.

**Aufgabe** der Erfindung ist es daher, ein Verfahren zur Herstellung eines mehrfarbigen Reflexions-Volumenhologramms mit einer festgelegten, kontrollierten Farbänderung, ein Reflexions-Volumenhologramm-Master und ein Dokument mit einem solchen Hologramm gemäß o. g. Gattung anzugeben, durch die der materielle und zeitliche Aufwand für Fälscher so erhöht wird, dass eine Fälschung nahezu unmöglich gemacht wird, wobei eine vereinfachte und dadurch kostengünstige Herstellung zu ermöglichen ist. Gleichzeitig sollen die aus der Erfahrung für die Wiedererkennung und Kopier- und Nachahmungssicherheit besten Effekte in einem Element vereinigt und verstärkt sein.

Diese Aufgabe wird durch ein Verfahren mit den Merkmalen des Anspruchs 1 gelöst, sowie durch ein Dokument nach Anspruch 7 und einen Reflexions-Volumenhologramm-Master nach Anspruch 8. 9. Vorteilhafte Ausgestaltungen sind in den entsprechend rückbezogenen Unteransprüchen gekennzeichnet.

Dem gemäß wird ein mehrfarbiges Reflexions-Volumenhologramm mittels eines einzigen Reflexions-Masterhologramms mit mehreren unterschiedlichen monochromatischen Reflexions-Subhologrammen (rot, grün, blau) und eines einzigen monochromatischen Kopierstrahls einer Wellenlänge im UV- bis IR-Bereich, wie z. B. blau, hergestellt. Dabei trifft das Kopierstrahl-Bündel unter einem ausgewählten Einfallswinkel auf die aus dem Masterhologramm und der Kopierschicht gebildete Struktur auf, während der Einfallswinkel des Kopierstrahls so berechnet ist, daß die Struktur des zugeordneten Subhologramms in der Kopierschicht wiedergegeben wird. Die Verwendung eines einzigen monochromatischen Kopierstrahls führt zu einer vereinfachten und dadurch zu einer kostengünstigeren Herstellung gegenüber der aus dem Stand der Technik bekannten Herstellung mit mehrfarbigen Kopierstrahlen und/oder mehreren einfarbigen Masterhologrammen oder mit zusätzlichen Filtern mit Informationen.

Dabei wird der monochromatische blaue Aufnahmestrahl mittels eines Lasers erzeugt. Dafür können übliche monochromatische Laser verwendet werden.

Zur Herstellung des erfindungsgemäßen farbigen Reflexions- Volumenhologramms, wird somit ein spezieller Master verwendet, nämlich ein Reflexions-Volumenhologramm mit mehreren Subhologrammen, wobei aber auch ein Oberflächenhologramm (Prägehologramm) oder eine Kombination aus beiden verwendbar sein kann.

Das mehrfarbige Reflexions-Volumenhologramm wird durch Kopieren der Bragg'schen Netzebenen mehrerer monochromatischer Subhologramme eines Master-Reflexionshologramms in eine zu diesem Master-Hologramm parallel angebrachte Kopierschicht durch Belichten der Kopierschicht mit dem monochromatischen Kopierstrahl hergestellt. Dabei besteht der Kopierstrahl aus einem Strahlenbündel von Strahlen gleicher Wellenlänge, wobei durch die Aufnahmegeometrie eines jeden Subhologramms des Masters ein geeignetes Strahlenbündel vorhanden ist. Jedes Strahlenbündel trifft unter einem vorbestimmten Beugungs- oder Einfallswinkel auf die Kopierschicht, der jeweils so berechnet wird, dass die Struktur des zugeordneten Subhologramms in der Kopierschicht wiedergegeben wird.

So kann man einfach und kostengünstig mit einem einzigen monochromatischen Aufnahmestrahl die Bragg'schen Netzebenen mehrerer monochromatischer Subhologramme in einer Schicht kopieren. Jedes Subhologramm ist dabei Teil eines einzigen Masterhologramms und wird durch Interferenz von zwei monochromatischen Wellen, nämlich einer Objekt- und einer Referenzwelle, in einer Schicht, vorzugsweise einer Fotoschicht, erzeugt.

Die Kopier-Fotoschicht wird dabei auf das Master-Reflexionshologramm mit Index Match Material oder durch Laminieren aufgebracht und dann mit dem monochromatischen Kopierstrahl belichtet. Ein Bündel des Kopierstrahls, das einem Subhologramm zugeordnet ist, wird dann an der der Fotoschicht zugewandten Seite/Fläche des Subhologramms hineingebrochen, dann an den Bragg'schen Netzebenen des Subhologramms reflektiert bzw. gebeugt und so erneut in die Fotoschicht umgelenkt. Das ursprüngliche Bündel des Kopierstrahls interferiert dann mit dem umgelenkten Bündel des Kopierstrahls in der Fotoschicht. Dabei bilden sich in der Fotoschicht Bragg'sche Netzebenen, die den Bragg'schen Netzebenen des Subhologramms gleichen.

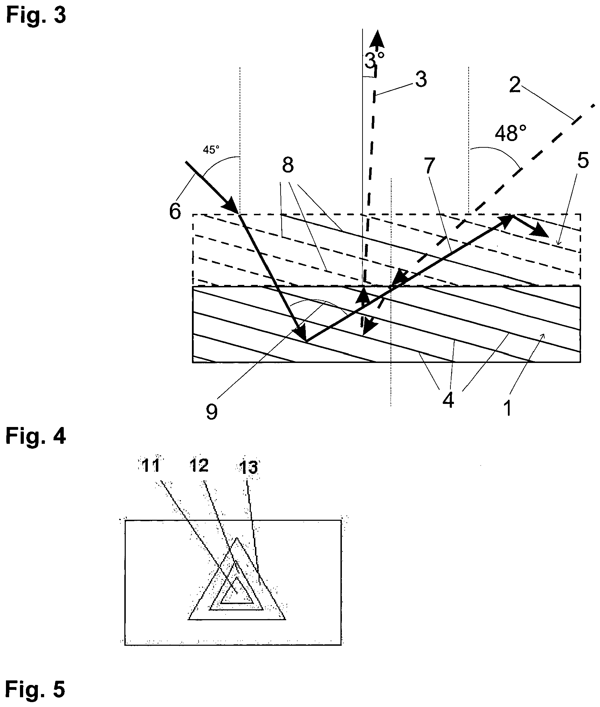

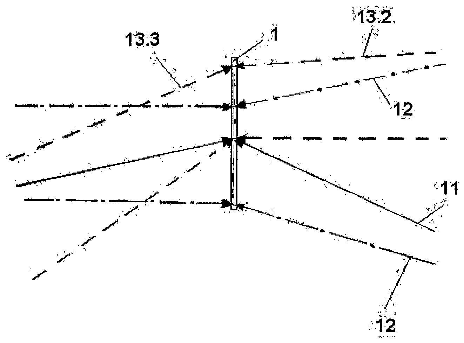

Das Master-Reflexionshologramm wird mit mehreren monochromatischen Subhologrammen, insbesondere mit einem blauen, einem grünen und einem roten Subhologramm ausgewählt oder hergestellt. Dabei werden die monochromatischen Subhologramme jeweils mittels (ebenfalls blauen) Referenzstrahlen mit unterschiedlichen Einfallswinkeln erzeugt, in Abstimmung mit dem Kopierstrahlwinkel für z. B. einen blauen Kopierstrahl von Z. B. 45°, wie im Weiteren im Zusammenhang mit Fig. 4 ausgeführt wird. Der verwendete monochromatische (blaue) Kopierstrahl zum Kopieren der verschiedenen Bragg'schen Ebenen der Subhologramme in der Fotoschicht weist dabei mehrere Teilstrahlen mit gleicher Wellenlänge aber unterschiedlichen Einfallswinkeln auf. Der Einfallswinkel eines jeden Teilstrahls ist jeweils auf das Kopieren einer Bragg'schen Netzebene abgestimmt.

Das Verfahren ist selbstverständlich nicht auf Lichtwellenlängen im sichtbaren Spektrum beschränkt sondern lässt sich auch im Ultra Violet (UV) oder im Infrarot (IR) Bereich anwenden. Sollten im gewünschten Spektralbereich keine kohärenten Lichtquellen verfügbar sein, so kann das Hologramm mit einer andern Wellenlänge hergestellt werden und bei Bedarf mit Schrumpfen oder Schwellen in die geforderte Wellenlänge getunt werden.

Wird ein Prägehologramm als "Master" für eine "blaue Kontaktkopie" verwendet, dann müssen die Gitter ebenfalls den Regeln in Bezug auf sehr flache Winkel entsprechen. Zu beachten ist, dass in diesem Fall die höheren Beugungsordnungen Farbeffekte erzeugen können, die durch geeignetes Design und Berechnung verstärkt oder vermieden werden können.

Für ein komplettes Farbdesign eines erfindungsgemäßen Hologramms muss natürlich mindestens ein blaues, ein grünes und ein rotes Hologramm vorhanden sein. Durch graphische Kombinationen, Überlagerungen etc., kann so aus nur einem einzigen Masterhologramm nach diesem Verfahren ein echtfarbiges Reflexionshologramm kopiert werden. Durch dementsprechende Anordnung der einzelnen Farbelemente können nun auch Kippeffekte (auch schwarz-weiß durch Farbmischung), Laufeffekte, Verformungs- und Änderungseffekte (Morphing) in Echtfarbe erzielt werden, ohne weitere Laser zum Erzeugen des Kopierstrahls in anderen Farben bzw. Wellenlängen zu benutzen.

Vorzugsweise wird das Master-Reflexionshologramm mit mehreren Bereichen (Pixel) ausgewählt, die jeweils mindestens ein oder mehrere monochromatische Subhologramme aufweisen, die insbesondere mit unterschiedlichen Einfallswinkeln der Referenzstrahlen erzeugt werden.

Die Tatsache, dass ein Reflexions-Volumenhologramm mit diesem Verfahren in Serie produziert werden kann, das z. B. eine dreifarbige Rekonstruktion aufweist, jedoch nur mit einer einzigen Wellenlänge aufgenommen/hergestellt/kopiert wurde, ist ein enormer Rationalisierungssprung.

Will man nun ein solches erfindungsgemäßes Reflexions-Volumenhologramm kopieren/fälschen, dann müssen mehrere Laser, mit für jedes Bildelement unterschiedlichen Winkeln, eingesetzt werden. So ist eine Kopie nahezu unvorstellbar. Die Nachahmung ist durch komplexes Design und das ohnehin schwierige Aufnahmeverfahren echtfarbiger Volumenhologramme extrem erschwert.

Nachfolgend wird die Erfindung anhand mehrerer Ausführungsbeispiele unter Bezug auf die Zeichnung näher erläutert.

Es zeigen:
- Fig. 1:: eine schematische Darstellung der Erzeugung eines (roten) Masterhologramms;
- Fig. 2:: eine schematische Darstellung der Erzeugung eines roten Masterhologramms in Variante mit blauer Wellenlänge und Einkoppelelement;
- Fig. 3:: eine schematische Schnittansicht eines monochromatischen Master-Reflexionshologramms mit einer Kopier-Fotoschicht;
- Fig. 4:: eine schematische Ansicht eines erfindungsgemäßen Master- Reflexions-Volumenhologramms mit mehreren Subhologrammen, und
- Fig. 5:: eine Schemaansicht eines erfindungsgemäßen Master- Volumenhologramms mit jeweiligen Objekt- und Referenzstrahlen der vorhandenen Subhologramme.

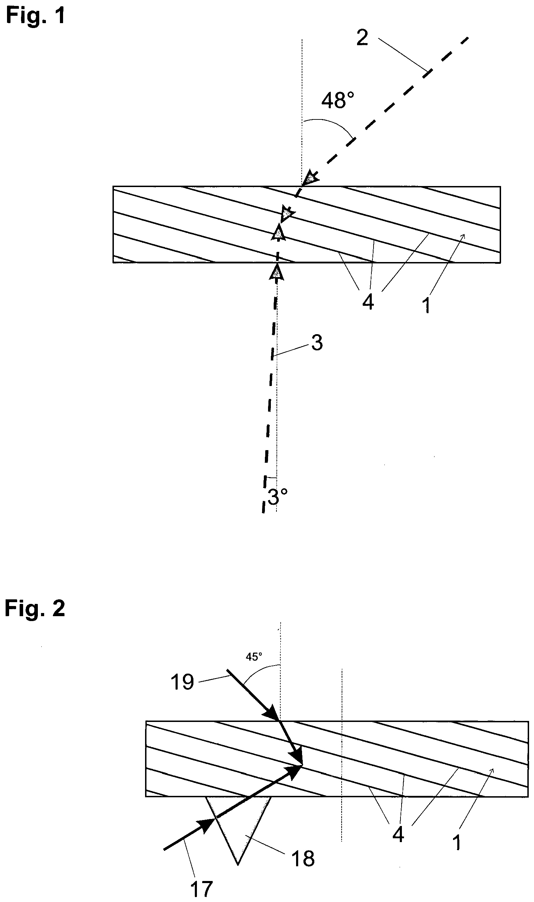

In **Fig. 1****.** ist der erste Schritt des erfindungsgemäßen Verfahrens dargestellt, nämlich die Erstellung z. B. eins roten (Master-) Reflexionshologramms 1 bzw. eine Volumengitter-Aufnahme unter Belichtung einer Fotoschicht 5 mit zwei Wellen/Strahlen 2 und 3 mit der Wellenlänge 633 nm (rot). Dabei trifft ein roter Referenzstrahl 2 unter einem Winkel von 48° auf die Oberfläche des Masterhologramms und wird in dieses hineingebrochen (2'). Gleichzeitig trifft ein Objektstrahl 3 aus der entgegengesetzten Richtung kommend, unter einem Winkel von 3° auf die untere Fläche des Masterhologramms 1 auf und tritt nahezu ungebrochen in das Masterhologramm 1 ein. Es entstehen nun durch deren Interferenz in der Hologrammschicht 1 Bragg'schen Netzebenen 4 im durch die Aufnahmewellenlänge vorgegebenen Abstand. Das Masterhologramm 1 (der Master) wird danach fototechnisch entwickelt, um für die Kopie genügend Wirkungsgrad zu erhalten.

In **Fig. 2** ist ein Beispiel dargestellt, in dem das "rote" Masterhologramm mit einem Aufnahmestrahl der blauen Wellenlänge (z.B. 476 nm) und unter Verwendung eines Einkoppelelements, hier eines Prismas 18 direkt hergestellt wird. Dabei stellen die Strahlen 17 und 19 jeweils die (blauen) Objekt- bzw. Referenzstrahlen dar.

**Fig. 3** veranschaulicht einen nachfolgenden Verfahrensschritt, wobei die Vorgehensweise (zur Vereinfachung der Erklärung) anhand eines "roten" Master- Volumenhologramms 1 und eines "blauen" Kopierlaserstrahls 6 dargestellt ist. Ein unbelichtetes Fotomaterial wurde vorhergehend als Kopier-Fotoschicht 5 mit dem nach Fig. 1 hergestellten "Master" 1 in Kontakt gebracht, vorzugsweise auflaminiert oder mit einem zwischenbefindlichen Indexmatch-Material. Die Fotoschicht 5 wird nun als neues Hologramm vom ursprünglich "roten" Master-Hologramm 1 mit einem blauen (z. B. 476 nm) Laser-Kopierstrahl 6 kopiert. Dabei trifft der Kopierstrahl 6 unter 45° von links kommend auf das Film-Sandwich. Der Strahl 6 wird in die Fotoschicht 5 (dichtes Medium) hineingebrochen (6'), durchläuft zuerst das noch unbelichtete Material der Kopierschicht 5 und trifft auf das untere Master-Hologramm 1, wo es an dessen Bragg'schen Ebenen 4 gebeugt bzw. als Strahl 7 in Richtung Kopierschicht 5 ("neues" Hologramm) reflektiert wird. In der Foto-/Kopierschicht 5 interferieren nun die Strahlen 6 und 7 miteinander und bilden neue Netzebenen 8, die in Geometrie und Abstand den Netzebenen des Hologramms 1 entsprechen. Wird nun das neu entstandene Hologramm 5 unter ca. 48° von rechts in weißes Licht (weißer Rekonstruktionswelle 2a) gebracht, dann rekonstruiert es wieder rot (roter Rekonstruktionswelle 3a). Um den für Rot relativ großen Gitterabstand mit blauem Licht zu erhalten, ist ein sehr großer Winkel 9 zwischen Strahl 6 und 7 notwendig. Bei der Vorgabe von 45° für den Einfallswinkel des blauen Kopierstrahls 6, ergibt sich im Master-Medium für den Strahlteil 7 ein so flacher Winkel, dass an deren oberen Fläche Totalreflexion auftreten würde. Um dies zu verhindern, ist es für die im Beispiel gewählte Geometrie notwendig, bei der Kontaktkopie Index-Match Material zu verwenden, wodurch der Strahl 7 in das Kopiermedium eingekoppelt wird. Dadurch erfolgt Totalreflexion erst an der oberen Fläche der Kopierschicht 5, was die Kopiertätigkeit nicht stört.

In **Fig. 4** ist ein Master-Hologramm mit einem blauen 11 (z. B. 443 nm), einem grünen 12 (z. B. 543 nm) und einem roten 13 (z. B. 633 nm) Subhologramm dargestellt. Die Aufnahmegeometrie wird z. B. für das rote Subhologramm 13 so berechnet, dass bei Rekonstruktion/Kopie mit blauem Laser (z. B.: 476 nm) unter z. B. 45° Rekonstruktionswinkel/ Einfallswinkel, eine Kontaktkopie möglich ist, wie in Fig.3 dargestellt. Auch für das grüne 12 und blaue 11 Subhologramm werden Aufnahmegeometrien auf 45° für einen blauen Kopierstrahl berechnet. Die Berechnung ist so durchzuführen, dass nach Erhalt der Kontaktkopie oder in der Kontaktkopie bei Rekonstruktion mit weißem Licht alle Farben unter dem gleichen bzw. gewünschten Betrachtungswinkel zu sehen sind.

So kann ein mehrfarbiges Reflexions-Volumenhologramm kostengünstig mit nur einer (blauen) Wellenlänge aufgenommen/hergestellt/kopiert werden.

In **Fig. 5** ist aufgezeigt, wie ein Master-Reflexions-Volumenhologramm 1 mit einem blauen 11, einem grünen 12 und einem roten 13 Subhologramm entsteht (Masteraufnahme). Die Subhologramme werden jeweils durch Interferenz von zwei monochromatischen ebenen Wellen, einer Objektwelle 3 (links im Bild) und einer Referenzwelle 2 (rechts im Bild) erhalten.

### Bezugszeichenliste

- 1.: Masterhologramm
- 2.: (roter) Referenzstrahl
- 2a: (weiße) Rekonstruktionswelle
- 3.: (roter) Objektstrahl
- 3a: (rote) Rekonstruktionswelle
- 4.: Bragg'sche Netzebenen
- 5.: Kopier-Fotoschicht (neues Hologramm)
- 6.: Kopierstrahl (blauer Laser)
- 7.: Kopierstrahl-Teil (gebeugt)
- 8.: Bragg'sche Netzebenen
- 9.: Beugungswinkel
- 10.: ---
- 11.: blaues Subhologramm
- 12.: grünes Subhologramm
- 13.: rotes Subhologramm
- 14.: ---
- 15.: ---
- 16.: ---
- 17.: Objektstrahl (blau)
- 18.: Prisma
- 19.: Referenzstrahl (blau)

## Patentansprüche

1. Verfahren zum Herstellen eines mehrfarbigen Reflexions-Volumenhologramms umfassend folgende Schritte:
- Versehen eines einzigen Masterhologramms (1) mit mehreren unterschiedlichen einfarbigen Subhologrammen (11,12,13) mit einem festgesetzten Design, welche die jeweiligen Bragg-Bedingungen erfüllen und den jeweils speziellen Rekonstruktionsstrahlen genügen,
- wobei die Aufnahmegeometrie eines jeden einfarbigen Master-Subhologramms (11, 12, 13) so berechnet ist, daß bei Rekonstruktion oder Kopieren unter Verwendung eines einzigen monochromatischen Lasers, mit einem vorbestimmten Einfallswinkel, eine Kontaktkopie erhalten wird, derart, daß in der erhaltenen Kontaktkopie, während die Rekonstruktion weißes Licht verwendet, alle Farben in der Kontaktkopie gesehen werden, unter dem gleichen, gewünschten Betrachtungswinkel.
- Aufbringen einer Kopierschicht (5) auf das Masterhologramm (1), durch Laminieren oder mit Index-Match Material,
- Erzeugen einer Kotaktkopie durch Kopieren der Struktur des Reflexions-Masterhologramms (1) in die zugeordnete Kopierschicht (5) mittels eines einzigen einfarbigen Kopier-/Aufnahmestrahls (6) kohärenten Lichts einer Wellenlänge im Ultraviolett- bis Infrarot-Bereich,
- wobei der einzige Kopierstrahl (6) aus einem Kopierstrahlbündel gleicher Wellenlänge für jedes/alle Subhologramm/e (11, 12, 13) besteht, wie blaues Laserlicht,
- wobei das Kopierstrahlbündel (16) unter einem ausgewähltem Einfallswinkel auf die aus Masterhologramm (1) und Kopierschicht (5) gebildete Struktur auftrifft,
- und wobei der Einfallswinkel des Kopierstrahlbündels so berechnet wird, dass die Struktur des zugeordneten Subhologramms (11, 12, 13) in der Kopierschicht (5) wiedergegeben wird,

2. Verfahren nach Anspruch 1, **dadurch gekennzeichnet,**
**dass** die mehreren monochromatischen Reflexions-Subhologramme des Masters ein rotes, ein grünes und ein blaues Subhologramm (11, 12, 13) sind.

3. Verfahren nach Anspruch 1, **dadurch gekennzeichnet,**
**dass** der verwendete einfarbige Kopierstrahl (6) oder Kopierstrahlbündel, eine Wellenlänge entsprechend blauem Licht von z. B. 476 nm besitzt.

4. Verfahren nach Anspruch 1, **dadurch gekennzeichnet,**
**dass** das Masterhologramm (1) mit mindestens einem Volumenhologramm und/oder mindestens einem Prägehologramm/Oberflächengitter/diffraktives Element ausgewählt oder hergestellt wird.

5. Verfahren nach einem der Ansprüche 1 bis 4, **dadurch gekennzeichnet, dass** das Master-Reflexionshologramm (1) mit mehreren Hologrammbereichen (Pixel) mit mehreren einfarbigen, großflächig oder kleinflächig überlagerten unterschiedlichen Bragg-Gittern, Subhologrammen (11,12,13) ausgewählt oder hergestellt wird, die mit einer kürzeren Wellenlänge 1:1 kopiert werden.

6. Verfahren nach Anspruch 5, **dadurch gekennzeichnet, dass** die einzelnen einfarbigen Mastersubhologramme in mehreren separaten Schichten oder daß alle Mastersubhologramme in einer einzigen Schicht des einzigen Reflexions-Masterhologramms (1) gespeichert sind.

7. Dokument mit mindestens einem mehrfarbigen Reflexions-Volumenhologramm hergestellt nach einem Verfahren nach mindestens einem der Ansprüche 1 bis 6.

8. Reflexions-Volumenholgramm-Master hergestellt nach mindestens einem der Ansprüche 1 bis 6, mit einem einzigen großflächigen oder kleinflächigen langwelligen Bragg-Gitter (Elementarhologramm), das mit einer kürzeren Wellenlänge im wesentlichen 1:1 kopiert wird.

9. Verwendung des Reflexions-Volumenholgramm-Masters nach Anspruch 8 für die Herstellung von HOE's, holografisch-optischen-Elementen.

## Claims

1. Method for the production of a multicolor reflection volume hologram, comprising the following steps:
- providing a single master hologram (1) with several different monochrome sub-holograms (11, 12, 13) with a predefined design, which meet the respective Bragg conditions and comply with the respective specific reconstruction beams,
- the imaging geometry of each monochrome master sub-hologram (11, 12, 13) being calculated such that with reconstruction or copying by means of a single monochrome laser, using a predefined angle of incidence, a contact copy is obtained, such that in the obtained contact copy, while the reconstruction uses white light, all colors are seen in the contact copy, at the same desired viewing angle,
- applying a copying layer (5) on the master hologram (1) by lamination or by means of index match material,
- creating a contact copy by copying the structure of the reflection master hologram (1) into the assigned copying layer (5) by means of a single monochrome copying/imaging beam (6) of coherent light with a wavelength in the ultraviolet to infrared range,
- the single copying beam (6) consisting of a copying beam bundle of the same wavelength for each/all sub-holograms (11, 12, 13), such as blue laser light,
- the copying beam bundle (16) impinging upon the structure formed by the master hologram (1) and the copying layer (5) at a selected angle of incidence,
- the incidence angle of the copying beam bundle being calculated such that the structure of the assigned sub-hologram (11, 12, 13) is reflected in the copying layer (5) .

2. Method according to Claim 1, **characterized in that**
the several monochrome reflection sub-holograms of the master are a red, a green and a blue sub-hologram (11, 12, 13).

3. Method according to Claim 1, **characterized in that**
the employed monochrome copying beam (6) or copying beam bundle has a wavelength corresponding to blue light of e. g. 476 nm.

4. Method according to Claim 1, **characterized in that**
the master hologram (1) is selected or produced with at least one volume hologram and/or at least one embossed hologram/surface grating/diffractive element.

5. Method according to one of Claims 1 through 4,
**characterized in that**
the master reflection hologram (1) is selected or produced with several hologram areas (pixels) with several different monochrome Bragg gratings, sub-holograms (11, 12, 13) overlapping in large or small areas and copied with a shorter wavelength 1:1.

6. Method according to Claim 5, **characterized in that**
the individual monochrome master sub-holograms are saved in several separate layers or **in that** all master sub-holograms are saved in a single layer of the single reflection master hologram (1).

7. Document with at least one multicolor reflection volume hologram, produced by a method according to at least one of Claims 1 through 6.

8. Reflection volume hologram master, produced according to at least one of Claims 1 through 6,
having a single large-area or small-area long-wave Bragg grating (elementary hologram) which is copied with a shorter wavelength substantially 1:1.

9. Use of the reflection volume hologram master according to Claim 8 to produce HOEs, holographic-optical elements.

## Revendications

1. Procédé de production d'un hologramme de volume de réflexion multicolore comprenant les étapes suivantes consistant à:
- fournir un seul hologramme maître (1) avec plusieurs sous-hologrammes monochromes différents (11, 12, 13) de conception fixe, qui satisfont aux conditions de Bragg respectives et satisfont aux rayons spéciaux de reconstruction respectifs,
- dans lequel la géométrie d'enregistrement de chaque sous-hologramme maître monochrome (11, 12, 13) est calculée de telle sorte que lors de la reconstruction ou de la copie à l'aide d'un seul laser monochromatique, avec un angle d'incidence prédéterminé, une copie de contact est obtenue, de sorte que dans la copie de contact reçue, tandis que la reconstruction utilise la lumière blanche, toutes les couleurs de la copie de contact sont vues sous le même angle de vue souhaité.
- appliquer une couche de copie (5) sur l'hologramme maître (1), par laminage ou avec un matériau à concordance d'indice,
- créer une copie de contact en copiant la structure de l'hologramme maître de réflexion (1) dans la couche de copie attribuée (5) au moyen d'un seul faisceau d'enregistrement/copie (6) monochrome de lumière cohérente avec une longueur d'onde dans la gamme ultraviolette à infrarouge,
- dans lequel le rayon de copie unique (6) consiste en un faisceau de copie de même longueur d'onde pour chaque/tous les sous-hologramme (s) (11, 12, 13), tel que la lumière laser bleue,
- dans lequel le faisceau de copie (16) bute sur la structure formée à un angle d'incidence choisi sur l'hologramme maître (1) et la couche de copie (5),
- et dans lequel l'angle d'incidence du faisceau de copie est calculé de sorte que la structure du sous-hologramme associé (11, 12, 13) soit reproduite dans la couche de copie (5),

2. Procédé selon la revendication 1, **caractérisé en ce que** la pluralité de sous-hologrammes de réflexion monochromatique du maître sont un sous-hologramme rouge, un vert et un bleu (11, 12, 13).

3. Procédé selon la revendication 1, **caractérisé en ce que** le rayon de copie monochrome (6) utilisé ou le faisceau de copie ont une longueur d'onde correspondant à la lumière bleue de par ex. 476 nm.

4. Procédé selon la revendication 1, **caractérisé en ce que** l'hologramme maître (1) est choisi ou réalisé avec au moins un hologramme de volume et/ou au moins un hologramme gaufré/réseau de surface/élément diffractif.

5. Procédé selon une quelconque des revendications 1 à 4, **caractérisé en ce que** l'hologramme de réflexion maître (1) est sélectionné ou réalisé avec plusieurs zones d'hologramme (pixels) comportant plusieurs sous-hologrammes (11, 12, 13) monochromes, superposées sur des grandes ou petites surfaces de différents réseaux de Bragg, ou qui sont copiés 1 : 1 avec une longueur d'onde plus courte.

6. Procédé selon la revendication 5, **caractérisé en ce que** les sous-hologrammes maîtres monochromes individuels sont stockés dans plusieurs couches distinctes ou **en ce que** tous les sous-hologrammes maîtres sont stockés dans une seule couche de l'hologramme maître de réflexion unique (1) .

7. Document avec au moins un hologramme de volume de réflexion multicolore produit selon un procédé selon au moins une des revendications 1 à 6.

8. Maître d'hologramme de volume de réflexion produit selon au moins une des revendications 1 à 6, avec un seul réseau de Bragg (hologramme élémentaire) de grande longueur d'onde sur une grande ou petite surface qui est copié essentiellement 1 : 1 avec une longueur d'onde plus courte.

9. Utilisation du maître d'hologramme de volume de réflexion selon la revendication 8 pour la production de HOE's, éléments holographiques-optiques.
